# EUROPÄISCHE PATENTSCHRIFT

(11) **EP 3 501 794 B1**
(45) Veröffentlichungstag und Bekanntmachung des Hinweises auf die Patenterteilung: **25.12.2024**
(21) Anmeldenummer: 18201660.0
(22) Anmeldetag: 22.10.2018
(51) Int. Cl.: B29C 64/118, B29C 64/112, B29C 64/194, B29C 64/393, B33Y 50/02, B33Y 30/00, B33Y 10/00

(54) **VORRICHTUNG UND VERFAHREN ZUR ADDITIVEN HERSTELLUNG DREIDIMENSIONALER BAUTEILE**
METHOD AND DEVICE FOR ADDITIVE MANUFACTURE OF THREE DIMENSIONAL STRUCTURES
DISPOSITIF ET PROCÉDÉ DE FABRICATION ADDITIVE DE COMPOSANTS TRIDIMENSIONNELS

(30) Priorität: 23.10.2017 DE 102017218892
(43) Veröffentlichungstag der Anmeldung: 26.06.2019
(73) Patentinhaber: HAGE3D GmbH, 8742 Obdach (AT)
(72) Erfinder: HAMPEL, Stefan, 8742 Obdach (AT); FREIGASSNER, Peter, 8742 Obdach (AT); ABEL, Johannes, 01309 Dresden (DE); MORITZ, Tassilo Dr., 09599 Freiberg (DE); SCHEITHAUER, Uwe, 01309 Dresden (DE); SCHWARZER, Eric, 01219 Dresden (DE); WEINGARTEN, Steven, 01157 Dresden (DE)
(74) Vertreter: Pfenning, Meinig & Partner mbB

(56) Entgegenhaltungen:
- US-A1- 2016 096 322
- US-A1- 2016 096 324
- US-A1- 2017 251 713

## Beschreibung

Die Erfindung betrifft ein Verfahren und eine Vorrichtung zur additiven bzw. generativen Herstellung dreidimensionaler Bauteile. Neben Möglichkeiten bei denen dreidimensionale Bauteile aus Pulvern schichtweise durch lokal definierte Energieeinträge ausgebildet werden, sind verschiedene Druckverfahren für eine solche additive Fertigung bekannt.

Unter anderem wird auch ein Schmelzschichtverfahren, nachfolgend als FFF-Verfahren bezeichnet, für eine additive Herstellung eingesetzt. Dabei erfolgt ein schichtweiser Auftrag von Strängen über- und ggf. auch nebeneinander. Nach der Herstellung erfolgt dann eine Aushärtung bzw. eine Sinterung des schichtweise aufgebrachten Werkstoffs.

Beim FFF-Verfahren können im oder oberhalb des Schmelzpunktes mit zu einem Strang verarbeiteten Feststoff enthaltenden thermoplastischen Polymer betrieben werden. Dabei bildet ein System aus mindestens einer thermoplastischen Komponente die Basis, in die ein oder mehrere pulverförmige oder faserförmige Materialien als Feststoff eingearbeitet wurden. Bei Raumtemperatur ist das feststoffenthaltende thermoplastische Polymer fest - für die Verarbeitung wird das thermoplastische Polymer mittels Wärmezufuhr aufgeschmolzen und nach der Ablage erstarrt dieses wieder infolge der Abkühlung.

Diese Art der Herstellung ist sehr gut für Strukturen, bei denen durchgängige Kurvenzüge abgefahren werden, geeignet. Es kann eine relativ hohe Produktivität / Aufbaurate im Vergleich zu anderen additiven Herstellungsverfahren erreicht werden. Es gibt bereits ein breites Portfolio an kommerziellen Anlagen und Herstellern. Außerdem sind Anlagen mit sehr großem Bauraum verfügbar, so dass auch großformatige oder eine Mehrzahl an Bauteilen in einer Anlage gefertigt werden können.

Bauteile, die allein mittels FFF-Verfahren hergestellt werden, beinhalten durch den quasikontinuierlichen schichtweisen Auftrag des aufgeschmolzenen Materials zwischen zwei oder mehreren benachbarten abgelegten Strängen Hohlräume (Porosität), die insbesondere bei spröden Werkstoffen bruchauslösende Defekte darstellen können. Mit Hilfe der Druckparameter ist das Vorkommnis materialbedingt nur eingeschränkt beeinflussbar. Die verwendeten Stränge in einer eingesetzten Schmelze weisen typischerweise im Arbeitstemperaturbereich eine mittlere bis hohe Viskosität auf. Unterbrechungen im Materialfluss, wie es zum Beispiel beim Verfahren der Düse an eine andere Position geschieht, sind aufgrund der Trägheit hinsichtlich der Materialförderung sowie der Kohäsionskräfte innerhalb der aufgeschmolzenen Masse sehr ungünstig. Weiterhin ist die Detailgenauigkeit von über mittels FFF generiert hergestellten Bauteilen im Vergleich zum dreidimensionalen Drucken aus einer Düse generierten Bauteilen eingeschränkt. Bei dem FFF-Verfahren werden Stränge entlang von Bahnen über und ggf. auch nebeneinander abgelegt. Beim dreidimensionalen Drucken werden einzelne Tropfen mit kleineren Volumina als die Stränge aufgedruckt.

Bei den FFF-Verfahren ist die erreichbare Auflösung begrenzt, da bestimmte Mindestradien eingehalten werden müssen und die einzeln schichtweise aufgetragenen Stränge an ihren äußeren Oberflächen abgerundet sind, so dass sich freie Zwickel auf und im Volumen nicht vermeiden lassen.

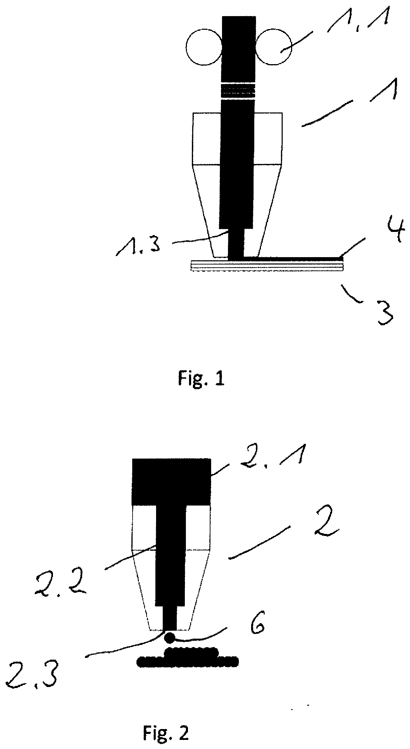

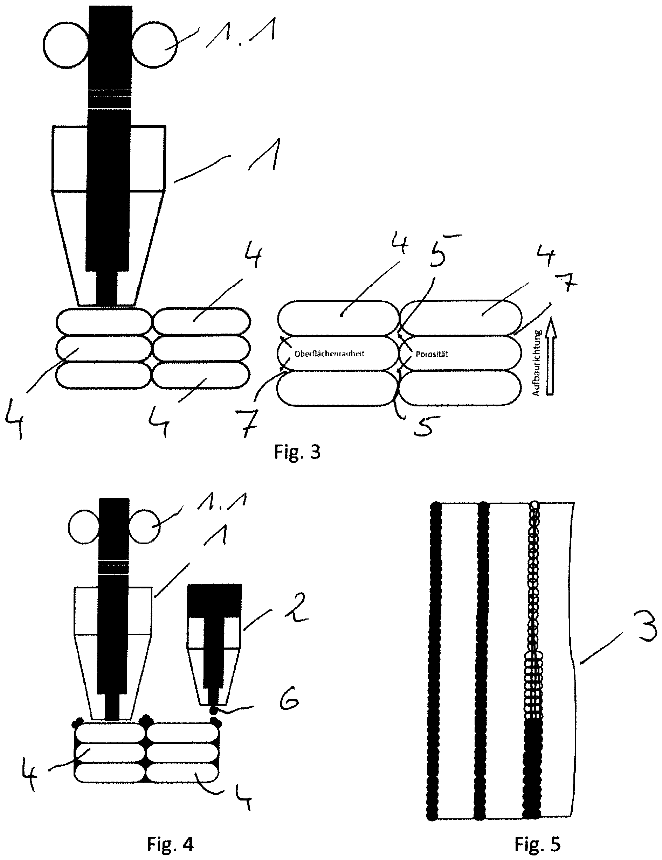

Aus Figur 1 geht in schematischer Form ein Beispiel einer Einrichtung 1, die für die Durchführung des FFF-Verfahrens geeignet ist, hervor. Es wird deutlich, dass durch eine dreidimensionale Bewegung der Einrichtung 1 eine schichtweise Herstellung eines Bauteils 3 erreicht werden kann, indem aus einer Düse ein Strang 4 durch Bewegung der Düsenöffnung austritt und der Strang 4 in Form einer Schicht auf einer Bauplattform (nicht gezeigt) oder auf einer vorab mit einem Strang ausgebildeten Schicht abgelegt wird und dadurch dreidimensionales ein Bauteil 3 hergestellt werden kann. Mit Figur 3 wird deutlich gemacht, dass die einzelnen Stränge 4 außen abgerundet sind und sich dadurch zwischen einzelnen Strängen Zwickel 5 ausbilden, die Hohlräume bilden, die nicht mit dem Werkstoff ausgefüllt worden sind. Es ist auch bei sehr kleindimensionierten, insbesondere hochgefüllten Strängen 4 nicht möglich, gänzlich ohne Zwickel 5 aus zu kommen.

Leider gelingt es auch bei einer Nachbearbeitung oder thermischen Behandlung nicht in ausreichendem Maß diese Hohlräume zu vermeiden/eliminieren, so dass das fertig hergestellte Bauteil nicht völlig frei von Hohlräumen ist und dadurch die Festigkeit nachteilig beeinflusst ist. Hohlräume sind dabei auch nicht immer homogen im Bauteilwerkstoff verteilt angeordnet und dimensioniert.

Bei der Fertigung können auch maßliche Abweichungen von Vorgaben nicht immer vermieden werden, so dass das fertig hergestellte Bauteil nicht die vorgegebenen Abmaße oder eine geänderte Geometrie aufweist, was eine sehr aufwändige in der Regel spanende Nachbearbeitung erforderlich macht.

US 2016/0096324 A1 betrifft ein Verfahren und eine Vorrichtung zum Herstellen dreidimensionaler Objekte.

Ein 3-dimensionaler Drucker und ein Verfahren zum Drucken eines Objekts mit einer härtbaren Flüssigkeit geht aus US 2017/0251713 A1 hervor.

Möglichkeiten zum farbigen dreidimensionalen Drucken sind aus US 2016/0096322 A1 bekannt.

Es ist daher Aufgabe der Erfindung, Möglichkeiten für eine Fertigung von dreidimensionalen Bauteilen anzugeben, mit denen filigrane Bauteile, mit verbesserter Konturgenauigkeit, ohne oder mit reduzierter Anzahl und Größe an im Bauteilwerkstoff vorhandenen Hohlräumen mit hoher Produktivität bei der Herstellung anzugeben.

Erfindungsgemäß wird diese Aufgabe mit einem Verfahren, das die Merkmale des Anspruchs 1 aufweist, gelöst. Anspruch 8 definiert eine Vorrichtung zur Herstellung dreidimensionaler Bauteile. Vorteilhafte Ausgestaltungen und Weiterbildungen der Erfindung können mit in untergeordneten Ansprüchen bezeichneten Merkmalen realisiert werden.

Eine erfindungsgemäße Vorrichtung zur additiven Herstellung von dreidimensionalen Bauteilen ist mit einer Einrichtung zur Durchführung eines Schmelzschichtverfahrens und einer Einrichtung zum dreidimensionalen Drucken gebildet. Die Einrichtung zur Durchführung eines Schmelzschichtverfahrens und die Einrichtung zum dreidimensionalen Drucken sind gemeinsam an eine elektronische Steuerung angeschlossen. Mit mindestens einem Manipulator sind beide Einrichtungen und das jeweilige Bauteil jeweils in mindestens drei Freiheitsgraden relativ in Bezug zueinander bewegbar. Der mindestens eine Manipulator sollte die Einrichtungen entlang von mindestens drei jeweils senkrecht zueinander ausgerichteten Achsen (x-, y- und z-Achse) bewegt werden können.

Beide Einrichtungen können als konventionelle an sich bekannte Einrichtungen ausgebildet sein. Als Manipulator können ein Linearantrieb oder auch mindestens ein Roboter oder andere Mehrachssysteme eingesetzt sein.

In der elektronischen Steuerung kann zur Herstellung eines Bauteils ein Computerprogramm genutzt werden, mit dem die Bewegung beider Einrichtungen und der Ausstoß des Werkstoffs oder der Werkstoffe, mit dem/denen das jeweilige Bauteil hergestellt werden soll, aus Düsen gesteuert und ggf. geregelt werden soll.

Die für die beiden unterschiedlichen Auftragsverfahren eingesetzten Einrichtungen können vorteilhaft so ausgebildet sein, dass mit den beiden Einrichtungen unterschiedliche Werkstoffe verarbeitet werden können. In einer Suspension oder auch Schmelze können unterschiedliche Feststoffanteile oder Feststoff mit unterschiedlichen Partikelgrößen enthalten sein. Vorteilhaft kann es auch sein, wenn die Einrichtung zur Durchführung eines Schmelzschichtverfahrens und die Einrichtung zum dreidimensionalen Drucken mit einem Manipulator gemeinsam bewegbar sind. Die Einrichtung zum dreidimensionalen Drucken kann dabei mit der Einrichtung zur Durchführung eines Schmelzschichtverfahrens mit bewegt werden und daran so befestigt sein, dass eine Bewegung in mindestens zwei Freiheitsgraden unabhängig von der Einrichtung zur Durchführung eines Schmelzschichtverfahrens möglich ist. Dazu kann die Einrichtung zum dreidimensionalen Drucken vorteilhaft eine mittels der elektronischen Steuerung initiierte Rotationsbewegung um die mittlere Längsachse der Einrichtung zur Durchführung eines Schmelzschichtverfahrens ausführen. Sie kann so in verschiedenen Winkelstellungen in Bezug zur mittleren Längsachse bzw. zur Düse der Einrichtung zur Durchführung des Schmelzschichtverfahrens gedreht und je nach Bedarf positioniert werden. Mit einem Teleskop oder einem anderen Linearantrieb kann zusätzlich der Abstand zur Düse der Einrichtung zur Durchführung des Schmelzschichtverfahrens verändert und an den jeweiligen erforderlichen Ort, an dem ein Auftrag von Tropfen einer Suspension des Bauteilwerkstoffs erfolgen soll, angepasst werden.

Mit dem erfindungsgemäßen Verfahren werden Bereiche des jeweiligen Bauteils mit einer Einrichtung zur Durchführung eines Schmelzschichtverfahrens und andere Bereiche des Bauteils mit einer Einrichtung zum dreidimensionalen Drucken ausgebildet. Mit der Einrichtung zum dreidimensionalen Drucken werden bevorzugt Bereiche eines Bauteils ausgebildet, die Hohl- oder Freiräume infolge des limitierten Werkstoffauftrags beim Schmelzschichtverfahren mit Werkstoff versorgt, so dass Vertiefungen an der Oberfläche und Hohlräume im Werkstoff des fertig hergestellten Bauteils vermieden werden können.

Mit der Einrichtung zum dreidimensionalen Drucken werden Fehlstellen, Zwickel oder Abweichungen von einer vorgegebenen Geometrie oder Dimensionierung des jeweiligen Bauteils, die mit einem Sensor erfasst worden sind, die bei der Ausbildung mit der Einrichtung, die zur Durchführung eines Schmelzschichtverfahrens ausgebildet worden sind, ausgefüllt oder ausgeglichen. Dazu ist ein berührungslos messender Abstandssensor vorteilhaft an die elektronische Steuereinheit angeschlossen sein. Mit der elektronischen Steuereinheit kann die Einrichtung, die zum dreidimensionalen Drucken ausgebildet ist, dem mit dem Sensor erfassten Signal entsprechend, zielgenau bewegt und der Werkstoffauftrag mit dieser Einrichtung lokal definiert bewegt und das jeweils dort erforderliche aufzubringende Werkstoffvolumen eingestellt werden. Dies kann beispielsweise über die Anzahl und Größe von aufgedruckten Tropfen beeinflusst werden. Die Anzahl und/oder die Größe einzelner Tropfen, die mit der Einrichtung zum dreidimensionalen Drucken im Bereich einer Fehlstelle, eines Zwickels oder einer Abweichung aufgebracht werden, können also an die jeweilige Größe der Fehlstelle, des Zwickels oder der Abweichung angepasst werden.

Ein Bauteil kann mit einem thermoplastischen Polymer hergestellt werden, der nach der additiven Herstellung mittels Abkühlung ausgehärtet wird.

Ein Bauteil kann aber auch mit einem Glas, einer Glaskeramik, einem Hartmetall, einem Cermet, einem metallischen und/oder keramischen Werkstoff hergestellt werden, wobei ein Glas, eine Glaskeramik, ein Hartmetall, ein Cermet ein metallischer Werkstoff und/oder ein keramischer Werkstoff oder deren Mischungen, auch faserverstärkt, in Form von Partikeln oder Fasern in einer Schmelze mit einem thermoplastischen Polymer schichtweise mit der Einrichtung, die zur Durchführung eines Schmelzschichtverfahrens und der Einrichtung zum dreidimensionalen Drucken tropfenweise aufgebracht und nach Fertigstellung eines Grünkörpers für das jeweilige Bauteil eine thermische Behandlung durchgeführt wird, bei der die organischen Komponenten entfernt werden und anschließend eine Sinterung erreicht wird. In der jeweiligen Suspension können dünne Fasern mit kurzer Länge im Bereich weniger Millimeter, bis maximal 20 mm enthalten sein. Der Durchmesser der Fasern sollte bei maximal 1 mm gehalten sein. In einer Schmelze, die mit einem FFF-Verfahren in Form von Strängen abgelegt wird, können deutlich längere Fasern enthalten sein.

Beim dreidimensionalen Drucken können neben Schmelzen auch Suspensionen, in denen Feststoff enthalten ist, eingesetzt werden.

Mit der Einrichtung, die zur Durchführung eines Schmelzschichtverfahrens ausgebildet ist, und mit der Einrichtung zum dreidimensionalen Drucken können Schmelzen aufgetragen werden, die mit unterschiedlichen Polymeren, insbesondere Polymeren mit unterschiedlichen Schmelztemperaturen gebildet sind, wobei bevorzugt das Polymer, das bei der Einrichtung zum dreidimensionalen Drucken eingesetzt wird, eine kleinere Schmelztemperatur als das Polymer, das für die Feststoff enthaltende Schmelze, die mit der Einrichtung, die zur Durchführung eines Schmelzschichtverfahrens ausgebildet ist, aufgebracht und zur additiven Herstellung eines jeweiligen Bauteils aufgetragen wird, aufweist.

Der Feststoffanteil in einer Schmelze oder Suspension sollte in jedem Fall größer 40 Vol.-%, bevorzugt größer 60 Vol.-% betragen. In einer Schmelze, insbesondere einer Schmelze die nur mit Polymer gebildet ist, kann auch kein Feststoff enthalten sein.

Als thermoplastische Polymere für Schmelzen kann man beispielsweise Polyolefine einsetzen. Gemische aliphatischer Kohlenwasserstoffe, im Speziellen Alkane und/oder Wachsen sind geeignete organische Binder für eine Suspension. Eine Suspension kann ebenfalls mit Wasser oder einer organischen Flüssigkeit gebildet sein, die die jeweiligen Feststoffe chemisch oder physikalisch nicht wesentlich verändert.

Mit einer Einrichtung zum dreidimensionalen Drucken kann eine selektive Ablage einzelner Tropfen an definiert vorgegebenen Positionen erreicht werden. Die maximal erreichbare Tropfengröße kann größer als bei einem Injektverfahren sein. Es ist auch ein höherer Füllgrad also ein höherer Feststoffanteil möglich. Die damit erreichbare Auflösung ist deutlich höher als bei dem FFF-Verfahren. Es kann eine lokal gezielte Ablage sehr kleiner Volumina erreicht werden und es ist ein Aufbau durchbrochener Strukturen sehr gut möglich. Der geringeren Produktivität / Aufbaurate bei einem dreidimensionalen Drucken kann mit dem FFF-Verfahren entgegengewirkt werden.

Beim Verfahren mit dreidimensionalem Drucken werden Einzeltropfen aus aufgeschmolzenem Material oder einer Suspension erzeugt und können dann entsprechend in Abständen im Hertz- bis Kilohertzbereich einzeln oder in Gruppen aufgedruckt werden. Durch diese diskrete Arbeitsweise und typischerweise geringe Tropfengröße ist es möglich, hohe Detailgenauigkeit mit stark reduzierter Trägheit der Materialförderung zu erreichen. Vorteilhafterweise können beim dreidimensionalen Drucken Schmelzen oder Suspensionen verwendet werden, die bei Arbeitstemperatur deutlich niedrigere Viskosität als beim FFF-Verfahren aufweisen.

Diese beiden Verfahren können in einem Bauteilfertigungsschritt, zeitlich parallel oder aufeinanderfolgend, innerhalb einer oder mehrerer Vorrichtungen mit dem gleichen oder unterschiedlichen Materialien kombiniert werden. Bevorzugt können unterschiedliche Schmelzpunkte bei im FFF-Verfahren und beim dreidimensionalen Drucken eingesetzten thermoplastischen Polymeren in einer Schmelze gewählt werden, wobei die thermoplastischen Polymere in einer Schmelze, die zum dreidimensionalen Drucken eingesetzt wird, einen geringeren Schmelzpunkt aufweisen sollte. Damit ist es möglich, abgelegte und ggf. bereits erstarrte Tropfen(-ketten) bei der Überfahrt mit dem höher schmelzenden Material, das beim FFF-Verfahren eingesetzt wird, erneut zu verflüssigen und mit der somit erzeugten mechanischen Spannung zu verdrängen. So können insbesondere Zwickel gefüllt werden, die sowohl die Oberflächenrauheit am Bauteilrand als auch die druckbedingte Porosität infolge Hohlräumen in Zwickelbereichen reduzieren. Es ist aber auch möglich, bei jeweils gleichen Arbeitstemperaturen zu arbeiten, sodass jeweils gleiches Material in beiden Schmelzen bei beiden Verfahren verwendet werden kann.

Zusätzlich ist es durch die Erfindung möglich, bei geeigneter Verwendung von Prozessüberwachungshard- und -software über FFF-Verfahren fehlgedruckte Bahnen mittels selektiver Ablage von Tropfen zu korrigieren. Dabei können bei Detektierung von Fehlstellen FFF-gedruckter Bahnen/Strängen, zum Beispiel durch ein online arbeitendes optisches Messverfahren, örtliche Materialmangel durch selektive Ablage wesentlich kleinerer Elemente (Tropfen) korrigiert werden. Der Eingriff in den G-Code des Steuerprogramms kann während des Bauteilherstellungsprozesses erfolgen.

Mit der Kombination beider Verfahren ergeben sich folgende Vorteile:
- es sind Materialkombinationen möglich
- es kann eine hohe Detailgenauigkeit/Auflösung erreicht werden
- es ist eine Korrektur von Baufehlern beim FFF-Verfahren durch dreidimensionales Drucken von Tropfen und eine Reduzierung der Porosität möglich
- die Qualität der Oberflächenrauheit gegenüber allein mit FFF-Verfahren hergestellter Bauteile kann verbessert werden
- Mit der Erfindung kann eine additive Fertigung von komplexen Polymer-, Metall-, Glas- oder Keramikbauteilen oder auch aus Verbundwerkstoffen dieser Werkstoffe wie etwa Glaskeramiken, Cermets, Hartmetalle oder faserverstärkte Bauteile erreicht werden.

Werden Feststoffe bei dem FFF-Verfahren und bei dem dreidimensionalen Drucken eingesetzt, sollten Schmelzen bzw. Schmelze und Suspension eingesetzt werden, die man bei einer gemeinsamen thermischen Behandlung gemeinsam sintern kann.

Nachfolgend soll die Erfindung beispielhaft näher erläutert werden.

Dabei zeigen:
- Figur 1: eine schematische Darstellung einer Einrichtung, die zur Durchführung eines Schmelzschichtverfahrens;
- Figur 2: eine schematische Darstellung einer Einrichtung zum dreidimensionalen Drucken;
- Figur 3: eine schematische Darstellung einer Einrichtung zur Durchführung eines Schmelzschichtverfahrens mit einem damit in mehreren übereinander angeordneten Schichten ausgebildeten Bauteil;
- Figur 4: eine schematische Darstellung eines Beispiels einer erfindungsgemäßen Vorrichtung und
- Figur 5: eine schematische Schnittdarstellung eines mit der Erfindung hergestellten Bauteils durch FFF und mit durch 3 dimensionalem Drucken gefüllten Fehlstellen (rechte Seite des Bauteils)

Die in Figur 2 gezeigte Einrichtung 2 zum dreidimensionalen Drucken weist einen Vorratsbehälter 2.1 in dem eine zum Drucken geeignete Suspension enthalten ist, einen Verdichter 2.2 zum Fördern der Suspension in Form einzelner Tropfen 6 durch eine Düse 2.3 auf. Die aus der Düse 2.3 austretenden Tropfen können, wie in Figur 2 erkennbar, einzeln nebeneinander und in Reihen schichtweise übereinander abgelegt werden, so dass eine generative Fertigung dreidimensionaler Bauteile 3 möglich wird.

Mit Figur 3 wird deutlich, wie Stränge 4 mit einer Einrichtung 1, die zur Durchführung eines Schmelzschichtverfahrens ausgebildet ist, übereinander in Form von Schichten abgelegt werden können. Mit einem Fördermechanismus 1.1 wird ein Strang/Filament gefördert und damit erwärmte Schmelze gebildet, die als Strang 4 vorgebbarer Länge aus einer Düse 1.2 gefördert wird. Die Förderung kann mit einem Extruder erreicht werden.

Wie man Figur 3 ebenfalls entnehmen kann, bilden sich in Stirnflächenbereichen benachbarter Stränge 4 Zwickel 5 aus, die frei von Schmelze sind und Hohlräume bilden. An der äußeren Oberfläche eines mit den übereinander in Schichten angeordneten Strängen 4 gebildeten Bauteils 3 bilden sich ebenfalls Zwickel oder Vertiefungen 7 aus, die eine schlechte Oberflächenqualität eines so hergestellten Bauteils 3 bewirken würden.

Dem kann mit einer Vorrichtung, wie sie beispielhaft in Figur 4 gezeigt ist, entgegengetreten werden. Die Zwickel 5 oder Vertiefungen 7 können nämlich mit Tropfen 6, die mit einer Einrichtung 2 zum dreidimensionalen Drucken verfüllt oder ausgefüllt werden. Dazu wird die Einrichtung 2 zum dreidimensionalen Drucken entsprechend mit ihrer Düse 2.3 positioniert. Die Positionierung und das jeweilige lokal zu applizierende Tropfenvolumen der Schmelze oder Suspension, die aus der Einrichtung 2 zum dreidimensionalen Drucken aufgetragen wird, kann über die in allen Figuren nicht gezeigte elektronische Steuerung beeinflusst werden.

Figur 5 kann man entnehmen, wo und in welcher Menge an einem Bauteil 3 Schmelze oder Suspension, in der Bauteilwerkstoff enthalten ist, mit einer Einrichtung 2 zum dreidimensionalen Drucken appliziert worden ist. So wurden drei Bahnen über das Schmelzschichtverfahren abgelegt und die dazwischen entstandenen Zwickel durch drei dimensionalen Druck gefüllt. Insbesondere Fehlstellen, wie sie an der äußerst rechten mittels Schmelzschichtverfahren abgelegten Bahn entstanden sind, können durch gezielte Tropfenablage über das drei dimensionale Drucken korrigiert werden. Figur 5 stellt die Bauteilaufsicht dar.

### Ausführungsbeispiel:

Hybride Fertigung eines Keramikbauteils über ein FFF-Verfahren und dreidimensionalen Drucken

Basierend auf einem CAD-Modell soll ein Bauteil 3 hergestellt werden, das anteilig über das FFF-Verfahren mit einer dafür ausgebildeten Einrichtung 1 und anteilig über dreidimensionales Drucken mit einer Einrichtung 2 hergestellt und werden soll. Das CAD-Modell wird in einem geeigneten Programm zu einem G-Code mit sämtlichen Verarbeitungsparametern wie, Strangdurchmesser, Düsendurchmesser, Verarbeitungsgeschwindigkeit, Verarbeitungstemperatur, Bauraumtemperatur, Schichthöhe, Bahnführung, für das jeweilige Fertigungsverfahren FFF und dreidimensionales Drucken überführt und einer elektronischen Steuerung übergeben. Entsprechend dem herzustellenden Bauteilanteil über das FFF-Verfahren wird wie folgt verfahren:
Als Strang 4 wird zum Beispiel eine 55 Vol.-% Al₂O₃ (Almatis CT 1200 SG) enthaltendes thermoplastisches Polymer eingesetzt, das mittels eines FFF-Verfahrens in Form einer Schmelze verarbeitet werden kann. Der restliche Anteil der Schmelze zum Auftragen von Strängen 4 sind 45 Vol.-% eines thermoplastischen Polymers, das bei erhöhter Temperatur aufgeschmolzen werden kann. Es kann eine Mischung aus Polyethylen und thermoplastischem Elastomer und Wachsen als geeignetes Polymerblend eingesetzt werden. Die Herstellung eines Stranges 4 erfolgt kontinuierlich mittels eines Doppelschneckenextruders mit einer Düse 1.3 mit einem Innendurchmesser von 1,9 mm bei 130 °C. Der Strang 4 liegt auf einer Spule oder einem anderen Vorratsbehälter in ausreichender Menge vor. Es werden üblicherweise Strangaußendurchmesser im Bereich von 1,75 mm bis 2,85 mm verwendet. Folgende Verarbeitungsparameter können Anwendung finden Strangaußendurchmesser 1,75 mm, Düsendurchmesser 0,8 mm, Verarbeitungsgeschwindigkeit 30 mm/s, Verarbeitungstemperatur 175 °C, Bauraumtemperatur 70 °C, Schichthöhe 250 µm. Die Stränge 4 können in Schichten entsprechend des Verfahrens quasikontinuierlich abgelegt werden.

Entsprechend der im G-Code des Steuerprogramms festgelegten Bahnführung wird während des Fertigungsprozesses dann an bestimmten Positionen mit dem Verfahren zum dreidimensionalen Drucken fortgefahren.

Entsprechend dem herzustellenden Bauteilanteil mit dreidimensionalen Drucken wird wie folgt verfahren:
Zur Herstellung einer Schmelze wird zunächst ein auf Paraffin und Bienenwachs basierendes Bindersystem in einem Dissolver bzw. Heißmischer bei 90 °C aufgeschmolzen und homogenisiert. Im folgenden Schritt erfolgt die Zugabe weiterer Additive, wie zum Beispiel Stearinsäure. Nach einer erneuten Homogenisierung der organischen Bestandteile wird schließlich der entsprechende Feststoff in mehreren Schritten dem aufgeschmolzenen Bindersystem hinzugegeben. Als Feststoff wird pulverförmiges Al₂O₃ mit einem Anteil von 67 Vol.-% der Schmelze zugegeben.

Zur Verarbeitung wird die Schmelze mit dem enthaltenen Feststoff in eine entsprechende Kunststoff- oder Metallkartusche gefüllt, die anschließend an ein Mikrodosiersystem einer Einrichtung 2 zum dreidimensionalen Drucken angeschlossen wird. Mit Hilfe einer zugehörigen Kartuschenheizung wird die mit thermoplastischem Feedstock und Feststoff gebildete Mischung bei einer Temperatur von 85 °C aufgeschmolzen und eine Schmelze gebildet. Mittels eines Druckluftanschlusses wird diese Schmelze bei einem Druck von 0,5 bar über einen Fluidikkörper in einen Düsenkompressionsraum gefördert. Das Mikrodosiersystem ist ein auf Piezo-Technik basierendes Jetventil. Nach der Festlegung der Dosierparameter wird die Schmelze, die sich im Düsenkompressionsraum befindet, durch die Auf- und Abbewegung eines Hartmetallstößels volumenweise dosiert durch den Düseneinsatz und die Düse 2.3 gedrückt. Es entstehen frei fliegende Tropfen 6 bzw. Tropfenketten. Es werden folgende Verarbeitungsparameter eingestellt: Düsentemperatur 110°C, Arbeitsabstand 1mm und Tropfenfrequenz 100 Hz. Durch die Variation der Dosierparameter kann die Tropfengröße variiert werden.

Nach der vollständigen Abarbeitung des G-Codes des Steuerprogramms liegt ein Grünkörper vor. Der entstandene Grünkörper wird zur Entbinderung einer Wärmebehandlung bei 600 °C in Luftatmosphäre unterzogen. Nach der vollständigen Entfernung der organischen Komponenten erfolgt die Sinterung bei 1600 °C unter Luft mit einer Haltezeit von 2 Stunden.

## Patentansprüche

1. Verfahren zur additiven Herstellung eines dreidimensionalen Bauteils, bei dem Bereiche des jeweiligen Bauteils mit einer Einrichtung (1) zur Durchführung eines Schmelzschichtverfahrens und andere Bereiche des Bauteils mit einer Einrichtung (2) zum dreidimensionalen Drucken ausgebildet werden und **dadurch gekennzeichnet, dass** mit der Einrichtung (2) zum dreidimensionalen Drucken Fehlstellen, Zwickel oder Abweichungen von einer vorgegebenen Geometrie oder Dimensionierung des jeweiligen Bauteils, die mit einem Sensor erfasst worden sind, die bei der Ausbildung mit der Einrichtung (1), die zur Durchführung eines Schmelzschichtverfahrens ausgebildet worden sind, gefüllt oder ausgeglichen werden.

2. Verfahren nach dem vorhergehenden Anspruch, **dadurch gekennzeichnet, dass** die Anzahl und/oder die Größe einzelner Tropfen, die mit der Einrichtung (2) zum dreidimensionalen Drucken im Bereich einer Fehlstelle, eines Zwickels oder einer Abweichung an die jeweilige Größe der Fehlstelle, des Zwickels oder der Abweichung angepasst wird/werden.

3. Verfahren nach einem der zwei vorhergehenden Ansprüche, **dadurch gekennzeichnet, dass** ein Bauteil (3) mit einem thermoplastischen Polymer hergestellt wird, der nach der additiven Herstellung ausgehärtet wird.

4. Verfahren nach einem der drei vorhergehenden Ansprüche, **dadurch gekennzeichnet, dass** ein Bauteil (3) mit zwei unterschiedlichen Werkstoffen hergestellt wird.

5. Verfahren nach einem der Ansprüche 1 oder 2, **dadurch gekennzeichnet, dass** ein Bauteil mit einem Polymer, Glas, einer Glaskeramik, einem Cermet, Hartmetall, einem metallischen und/oder keramischen Werkstoff hergestellt wird, wobei ein Glas, ein metallischer Werkstoff und/oder ein keramischer Werkstoff in Form von Partikeln oder kurzen Fasern in einer Schmelze mit einem thermoplastischen Polymer schichtweise mit der Einrichtung (1), die zur Durchführung eines Schmelzschichtverfahrens und mit der Einrichtung (2) zum dreidimensionalen Drucken einer einen Feststoff enthaltenden Suspension oder Schmelze tropfenweise aufgebracht und nach Fertigstellung eines Grünkörpers für das jeweilige Bauteil eine thermische Behandlung durchgeführt wird, bei der organische Komponenten entfernt werden und anschließend eine Sinterung erreicht wird.

6. Verfahren nach dem vorhergehenden Anspruch, **dadurch gekennzeichnet, dass** ein Bauteil mit faserverstärktem Material und/oder mit Verbundwerkstoff hergestellt wird.

7. Verfahren nach einem der zwei vorhergehenden Ansprüche, **dadurch gekennzeichnet, dass** mit der Einrichtung (1), die zur Durchführung eines Schmelzschichtverfahrens ausgebildet ist, und mit der Einrichtung (2) zum dreidimensionalen Drucken Feststoff enthaltende Suspensionen oder Schmelzen aufgetragen werden, die mit unterschiedlichen Polymeren, insbesondere Polymeren mit unterschiedlichen Schmelztemperaturen gebildet ist, wobei bevorzugt das Polymer, das bei der Einrichtung (2) zum dreidimensionalen Drucken eingesetzt wird, eine kleinere Schmelztemperatur als das Polymer, das in der Schmelze, die mit der Einrichtung (1), die zur Durchführung eines Schmelzschichtverfahrens ausgebildet ist, enthalten ist und zur additiven Herstellung eines jeweiligen Bauteils (3) aufgetragen wird, aufweist.

8. Vorrichtung zur additiven Herstellung von dreidimensionalen Bauteilen mit einem Verfahren nach einem der vorhergehenden Ansprüche, die mit einer Einrichtung (1) zur Durchführung eines Schmelzschichtverfahrens und einer Einrichtung (2) zum dreidimensionalen Drucken gebildet ist, wobei die Einrichtung (1) zur Durchführung eines Schmelzschichtverfahrens und die Einrichtung (2) zum dreidimensionalen Drucken gemeinsam an eine elektronische Steuerung angeschlossen sind und
die Einrichtung (1) zur Durchführung eines Schmelzschichtverfahrens und die Einrichtung (2) zum dreidimensionalen Drucken und das jeweilige Bauteil (3) mit mindestens einem Manipulator jeweils in mindestens drei Freiheitsgraden relativ in Bezug zueinander bewegbar sind und **dadurch gekennzeichnet, dass** ein Sensor zur Erfassung von Fehlstellen, Zwickel oder Abweichungen von einer vorgegebenen Geometrie oder Dimensionierung des jeweiligen Bauteils, vorhanden ist, wobei der Sensor ein berührungslos messender Abstandssensor ist der an eine elektronische Steuereinheit angeschlossen ist.

9. Vorrichtung nach dem vorhergehenden Anspruch, **dadurch gekennzeichnet, dass** die Einrichtung (1) zur Durchführung eines Schmelzschichtverfahrens und die Einrichtung (2) zum dreidimensionalen Drucken so ausgebildet sind, dass auch unterschiedliche Werkstoffe für die Herstellung eines Bauteils (3) verarbeitbar sind.

10. Vorrichtung nach einem der zwei vorhergehenden Ansprüche, **dadurch gekennzeichnet, dass** die Einrichtung (1) zur Durchführung eines Schmelzschichtverfahrens und die Einrichtung (2) zum dreidimensionalen Drucken mit einem Manipulator gemeinsam bewegbar sind wobei die Einrichtung (2) zum dreidimensionalen Drucken mit der Einrichtung (1) zur Durchführung eines Schmelzschichtverfahrens mit bewegt und daran so befestigt ist, dass eine Bewegung in mindestens zwei Freiheitsgraden unabhängig von der Einrichtung (1) zur Durchführung eines Schmelzschichtverfahrens möglich ist.

11. Vorrichtung nach dem vorhergehenden Anspruch, **dadurch gekennzeichnet, dass** mit der Einrichtung (2) zum dreidimensionalen Drucken eine mittels der elektronischen Steuerung initiierte Rotationsbewegung um die mittlere Längsachse der Einrichtung (1) zur Durchführung eines Schmelzschichtverfahrens ausführbar ist.

## Claims

1. Method for the additive manufacturing of a three-dimensional component, in which regions of the respective component are designed with a device (1) for performing a fused filament process, and other regions of the component are formed with a device (2) for three-dimensional printing and **characterised in that** with the device (2) for three-dimensional printing flaws, gussets or deviations from a predetermined geometry or dimensioning of the respective component, which have been detected by a sensor and which have been designed during design with the device (1), which has been designed to perform a fused filament process, are filled or levelled.

2. Method according to the preceding claim, **characterised in that** the number and/or the size of individual droplets printed with the device (2) for three-dimensional printing in the region of a flaw, a gusset or a deviation is adapted to the respective size of the flaw, the gusset or the deviation.

3. Method according to one of the two preceding claims, **characterised in that** a component (3) is produced with a thermoplastic polymer which is cured after additive manufacturing.

4. Method according to one of the three preceding claims, **characterised in that** a component (3) is produced with two different materials.

5. Method according to one of claims 1 or 2, **characterised in that** a component is manufactured with a polymer, glass, a glass ceramic, a cermet, carbide, a metallic and/or ceramic material, whereby a glass, a metallic material and/or a ceramic material in the form of particles or short fibres is layered in a melt with a thermoplastic polymer with the device (1), which is used for performing a fused filament process, and with the device (2) for three-dimensional printing of a suspension or a melt containing a solid material, and after completion of a green body for the respective component, a thermal process is performed in which the organic components are removed and then sintering is achieved.

6. Method according to the preceding claim, **characterised in that** a component is produced with fibre-reinforced material and/or with composite material.

7. Method according to one of the two preceding claims, **characterised in that** the device (1) designed to perform a fused filament process and the device (2) for three-dimensional printing are used to apply suspensions or melts containing solid materials, which are formed with different polymers, in particular polymers with different melting temperatures, whereby the polymer used in the three-dimensional printing device (2) has preferably a lower melting temperature than the polymer contained in the melt applied using the device (1) designed to perform a fused filament process and used for the additive manufacturing of a respective component (3).

8. Device for the additive manufacturing of three-dimensional components using a method according to one of the preceding claims, which is formed with a device (1) for performing a fused filament process and a device (2) for three-dimensional printing, whereby the device (1) for performing a fused filament process and the device (2) for three-dimensional printing are jointly connected to an electronic control system, and
the device (1) for performing a fused filament process and the device (2) for three-dimensional printing and the respective component (3) can each be moved with at least one manipulator relative to one another in at least three degrees of freedom
and **characterised in that** a sensor is present to detect flaws, gussets or deviations from a predetermined geometry or dimensioning of the respective component, whereby
the sensor is a non-contact distance sensor connected to an electronic control unit.

9. Device according to the preceding claim, **characterised in that** the device (1) for performing a fused filament process and the device (2) for three-dimensional printing are designed such that different materials can also be processed in the manufacture of a component (3).

10. Device according to one of the preceding claims, **characterised in that** the device (1) for performing a fused filament process and the device (2) for three-dimensional printing can be moved together with a manipulator, the device (2) for three-dimensional printing moving with the device (1) for performing a fused filament process and being attached thereto in such a way that movement is possible independently of the device (1) for carrying out a fused filament process in at least two degrees of freedom.

11. Device according to the preceding claim, **characterised in that** the device (2) for three-dimensional printing can be used to perform a rotational movement around the central longitudinal axis of the device (1), initiated by means of the electronic control system, to carry out a fused filament process.

## Revendications

1. Procédé de fabrication additive d'un composant tridimensionnel, dans lequel sont formées des zones du composant respectif avec un dispositif (1) pour la mise en oeuvre d'un procédé de dépôt à l'état fondu, et d'autres zones du composant avec un dispositif (2) pour une impression tridimensionnelle, et **caractérisé en ce qu'**avec le dispositif (2) pour une impression tridimensionnelle, des défauts, des interstices ou des écarts par rapport à une géométrie ou à un dimensionnement prédéterminé(e) du composant respectif, qui ont été détectés avec un capteur, sont remplis ou compensés avec le dispositif (1) qui a été conçu pour la mise en oeuvre d'un procédé de dépôt à l'état fondu.

2. Procédé selon la revendication précédente, **caractérisé en ce que** le nombre et/ou la taille de gouttes individuelles, avec le dispositif (2) pour une impression tridimensionnelle, sont modifiés dans la zone d'un défaut, d'un interstice ou d'un écart par rapport à la taille respective du défaut, de l'interstice ou de l'écart.

3. Procédé selon l'une quelconque des deux revendications précédentes, **caractérisé en ce qu'**un composant (3) est fabriqué avec un polymère thermoplastique qui est durci après la fabrication additive.

4. Procédé selon l'une quelconque des trois revendications précédentes, **caractérisé en ce qu'**un composant (3) est fabriqué avec deux matériaux différents.

5. Procédé selon l'une quelconque des revendications 1 ou 2, **caractérisé en ce qu'**un composant est fabriqué avec un polymère, un verre, une vitrocéramique, un cermet, un carbure cémenté, un matériau métallique et/ou de céramique, dans lequel un verre, un matériau métallique et/ou un matériau de céramique sous forme de particules ou de fibres courtes est appliqué en couches dans une masse fondue avec un polymère thermoplastique, avec le dispositif (1), qui est appliqué pour mettre en oeuvre un procédé de dépôt à l'état fondu et avec le dispositif (2) pour imprimer en trois dimensions une suspension ou une masse fondue contenant une matière solide, et après achèvement d'un corps vert pour le composant respectif, un traitement thermique est effectué, dans lequel les composants organiques sont éliminés, puis un frittage est obtenu.

6. Procédé selon la revendication précédente, **caractérisé en ce qu'**un composant est fabriqué avec un matériau renforcé de fibres et/ou avec un matériau composite.

7. Procédé selon l'une quelconque des deux revendications précédentes, **caractérisé en ce que** des suspensions ou des masses fondues contenant un matériau solide, qui est formé avec différents polymères, en particulier des polymères ayant des températures de fusion différentes, sont appliquées avec le dispositif (1), qui est conçu pour la mise en oeuvre d'un procédé de dépôt à l'état fondu, et avec le dispositif (2) pour une impression tridimensionnelle, dans lequel le polymère qui est utilisé par le dispositif (2) pour une impression tridimensionnelle présentant de préférence une température de fusion plus petite que le polymère qui est contenu dans la masse fondue qui est appliquée avec le dispositif (1), qui est conçu pour la mise en oeuvre d'un procédé de dépôt à l'état fondu, pour la fabrication additive d'un composant respectif (3).

8. Appareil de fabrication additive de composants tridimensionnels avec un procédé selon l'une quelconque des revendications précédentes, qui est formé avec un dispositif (1) pour la mise en oeuvre d'un procédé de dépôt à l'état fondu et un dispositif (2) pour une impression tridimensionnelle, dans lequel le dispositif (1) pour la mise en oeuvre d'un procédé de dépôt à l'état fondu et le dispositif (2) pour une impression tridimensionnelle sont connectés ensemble à une commande électronique, et
le dispositif (1) pour la mise en oeuvre d'un procédé de dépôt à l'état fondu et le dispositif (2) pour une impression tridimensionnelle et le composant respectif (3) peuvent être déplacés les uns par rapport aux autres avec au moins un dispositif de manipulation respectivement dans au moins trois degrés de liberté,
et **caractérisé en ce qu'**un capteur est présent pour détecter des défauts, des interstices ou des écarts par rapport à une géométrie ou à un dimensionnement prédéterminé(e) du composant respectif, dans lequel
le capteur étant un capteur de distance de mesure sans contact qui est connecté à une unité de commande électronique.

9. Dispositif selon la revendication précédente, **caractérisé en ce que** le dispositif (1) pour la mise en oeuvre d'un procédé de dépôt à l'état fondu et le dispositif (2) pour une impression tridimensionnelle sont conçus de telle sorte que différents matériaux peuvent également être traités pour la fabrication d'un composant (3).

10. Dispositif selon l'une quelconque des deux revendications précédentes, **caractérisé en ce que** le dispositif (1) pour la mise en oeuvre d'un procédé de dépôt à l'état fondu et le dispositif (2) pour une impression tridimensionnelle peuvent être déplacés conjointement avec un dispositif de manipulation, dans lequel le dispositif (2) pour une impression tridimensionnelle est déplacé avec le dispositif (1) pour la mise en oeuvre d'un procédé de dépôt à l'état fondu et y étant fixé de telle sorte qu'un déplacement dans au moins deux degrés de liberté indépendamment du dispositif (1) pour la mise en oeuvre d'un procédé de dépôt à l'état fondu soit possible.

11. Dispositif selon la revendication précédente, **caractérisé en ce qu'**avec le dispositif (2) pour une impression tridimensionnelle, un mouvement de rotation initié au moyen de la commande électronique autour de l'axe longitudinal médian du dispositif (1) pour la mise en oeuvre d'un procédé de dépôt à l'état fondu peut être exécuté.
